# FASCICULE DE BREVET EUROPEEN

(11) **EP 1 544 102 B1**
(45) Date de publication et mention de la délivrance du brevet: **17.04.2019**
(21) Numéro de dépôt: 04022026.1
(22) Date de dépôt: 16.09.2004
(51) Int. Cl.: B64C 27/57

(54) **Dispositif permettant de baisser automatiquement le pas collectif des pales du rotor principal d'un giravion lors d'une panne du moteur**
Vorrichtung zur automatischen Reduzierung der kollektiven Verstellung der Hauptrotorblätter eines Drehflüglers bei einer Triebwerksstörung
Device for automatically lowering the collective pitch of the main rotor blades of a rotorcraft during an engine failure

(30) Priorité: 18.12.2003 FR 0314926
(43) Date de publication de la demande: 22.06.2005
(73) Titulaire: Airbus Helicopters, 13725 Marignane Cedex (FR)
(72) Inventeur: Certain, Bernard, 13090 Aix en Provence (FR)
(74) Mandataire: GPI & Associés

(56) Documents cités:
- FR-A- 2 601 326
- US-A- 2 317 342
- US-A- 2 941 605
- US-A- 3 000 445
- US-A- 3 071 335

## Description

La présente invention concerne un dispositif de commande de vol pour la mise en autorotation d'un giravion monomoteur lors d'une panne moteur.

D'une façon générale, il est connu qu'un giravion monomoteur dispose d'instruments de mesure fournissant notamment au pilote, de façon continue, les valeurs des régimes de rotation du rotor principal et de l'installation motrice.

L'information relative au régime du rotor principal est indispensable pour assurer la sécurité du giravion. En effet, un régime trop élevé entraînerait une augmentation de la force centrifuge sur les pales avec le risque catastrophique de rupture d'une attache de pale. Un régime trop faible se traduirait par une perte de sustentation. De la même façon, le régime de rotation de l'installation motrice doit être surveillé de manière à rester dans les limites spécifiées par le constructeur du giravion, toute modification de ce régime changeant de fait celui du rotor principal.

Une panne motrice entraîne par conséquent une chute du régime rotor principal qui peut rapidement conduire à une perte de sustentation du giravion. Le pilote doit donc agir immédiatement, la solution unique s'offrant à lui étant toujours de baisser le pas collectif de pales pour passer en autorotation.

L'autorotation est un procédé permettant, avec un rotor principal tournant sans entraînement moteur, d'obtenir cependant une sustentation capable de maintenir le giravion en vol de descente stabilisée avec un taux de descente acceptable. L'autorotation correspond donc au vol de sécurité lorsque se produit une panne motrice. Pour assurer le régime du rotor principal dit d'autorotation, au moment d'une panne motrice, le pilote doit diminuer instantanément le pas collectif des pales de ce rotor principal.

Sitôt le pas collectif baissé, le pilote n'a plus qu'à laisser descendre son appareil. Le vent relatif attaque alors le rotor principal de bas en haut ce qui permet à ce dernier de se stabiliser à un régime d'autorotation.

En cas de défaillance de l'installation motrice, on comprend donc bien qu'il est primordial de baisser le pas des pales le plus rapidement possible afin de garder un régime de rotation du rotor acceptable.

Toutefois, depuis le vol stationnaire, la baisse de pas doit être finement dosée pour éviter une trop forte diminution initial du régime de rotation du rotor.

On connaît, par le document FR 2601326, un dispositif de mise automatique en configuration de vol dite d'autorotation dès l'apparition d'une défaillance de l'installation motrice. Ce dispositif agit sur les commandes de vol via un système de pilote automatique.

Cependant, ce dispositif ne résout que partiellement le problème, certains giravions ne possédant pas de pilote automatique.

Le document US3000445 montre un dispositif pour ajuster la poussée du rotor anticouple d'un hélicoptère. Ce dispositif comporte un actionneur muni d'un piston permettant, sous la pression de gaz prélevé sur le moteur du giravion, de modifier le pas du rotor anticouple de l'hélicoptère. Sans faire mention de seuil, l'ajustement est réalisé en permanence pour que la poussée du rotor anticouple soit ajustée en fonction du couple du rotor principal. Si la puissance du moteur change, le pas collectif du rotor anticouple est changé sans intervention d'aucune notion de seuil.

La présente invention a pour objet de baisser automatiquement le pas des pales du rotor principal d'un giravion monomoteur non pourvu de pilote automatique, en cas de défaillance de l'installation motrice, et ce dans le but de limiter la chute du régime de rotation de ce rotor principal.

Selon l'invention, un dispositif mécanique selon l'une quelconque des revendications 1-4, permettant de baisser automatiquement le pas collectif des pales du rotor principal d'un giravion monomoteur lors d'une panne moteur, comporte un actionneur qui augmente le pas collectif de ces pales à partir d'un seuil préfini et qui diminue ce pas collectif en dessous de ce seuil prédéfini. L'invention a également pour objet un giravion selon l'une quelconque des revendications 5-9.

Ce seuil prédéfini correspond à un fonctionnement du moteur à un niveau de puissance faible. Avantageusement, ce niveau de puissance faible est cependant suffisamment élevé pour que le régime de rotation du rotor, sans action sur les commandes de vol, reste supérieur au régime minimal autorisé par le constructeur du giravion. De ce fait, le niveau de puissance faible est sensiblement équivalent à 20% de la puissance nominale de ce moteur.

De plus cet actionneur possède de façon avantageuse une ou plusieurs des caractéristiques suivantes :
- l'actionneur est agencé sur une bielle disposée entre un levier de commande de pas collectif et un combinateur,
- l'actionneur est agencé sur un levier de renvoi du combinateur,
- l'actionneur est commandé par la pression d'un gaz prélevé avant la dernière turbine du moteur ou à la sortie de l'étage du compresseur de ce moteur.

En outre, la longueur d'un levier d'attaque basculant est avantageusement raccourcie d'environ 10%.

Par ailleurs, une unité de filtrage dissymétrique, régulant la pression du gaz prélevé sur le moteur en amont de l'actionneur, optimise le fonctionnement du dispositif.

L'invention et ses avantages apparaîtront avec plus de détails dans le cadre de la description qui suit, avec des exemples de réalisation donnés à titre illustratif en référence aux figures annexées qui représentent :
- la figure 1, une vue schématique des commandes de vol d'un giravion,
- la figure 2, un actionneur selon l'invention,
- la figure 3, l'agencement d'un actionneur selon un premier mode de réalisation,
- la figure 4, un diagramme pas plateau cyclique / pas pilote valable pour un premier mode de réalisation,
- la figure 5, l'agencement d'un actionneur selon un deuxième mode de réalisation,
- la figure 6, un diagramme pas plateau cyclique / pas pilote valable pour un deuxième mode de réalisation,
- la figure 7, un exemple de réalisation d'une unité de filtrage dissymétrique,
- la figure 8, un diagramme présentant la dynamique de l'unité de filtrage dissymétrique.

Les éléments présents dans plusieurs figures distinctes sont affectés d'une seule et même référence.

Dans la suite du texte, on appellera par commodité « pas pilote » le pas correspondant à la position du levier de pas collectif disposé dans le cockpit de l'aéronef et « pas plateau » le pas réel du plateau cyclique.

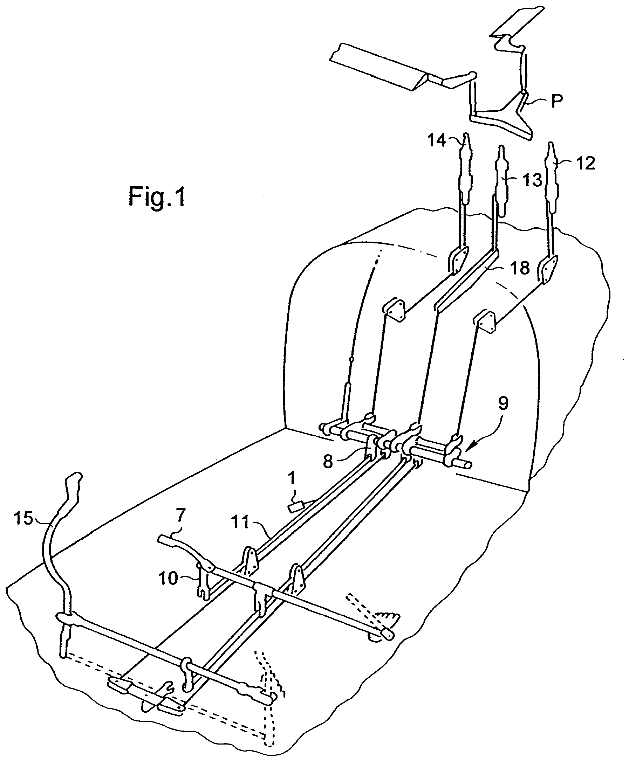

La figure 1 présente une vue schématique des commandes de vol d'un giravion.

Le levier de pas collectif 7 permet de modifier le pas collectif du giravion. Ce levier de pas collectif 7 est relié au levier de renvoi 8 d'un combinateur 9 via une deuxième tige 10 et une bielle 11. Lorsque ce levier de pas collectif 7 est tiré vers le haut, le combinateur 9 retranscrit cette commande sur les servo-commandes gauche 12, droite 14 et longitudinales 13. Ces servo-commandes se déplacent alors de la même valeur ce qui permet au plateau cyclique P de se mouvoir vers le haut parallèlement à lui-même et le pas des pales du rotor principal du giravion est augmenté. Lorsque le levier de pas collectif 7 est baissé, le mouvement est inversé et le pas des pales diminue.

Le manche 15 commande le plateau cyclique P. Lorsque le manche 15 est poussé vers l'avant, la servo-commande longitudinale 13 se rétracte, via la ligne de commande longitudinale et le levier d'attaque basculant 18, ce qui incline le plateau cyclique P vers l'avant.

On verra par la suite qu'un actionneur 1 agencé en série ou en dérivation sur la ligne de commande de pas permet de baisser automatiquement le pas collectif de pales au moment d'une panne moteur.

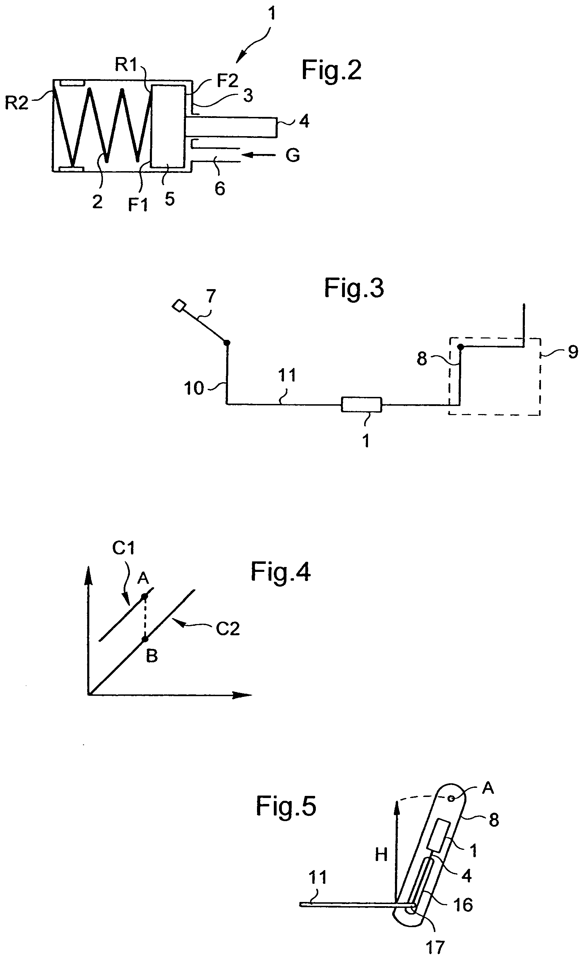

La figure 2 présente un actionneur 1 selon l'invention. Un premier ressort 2 est inséré dans le carénage 3 de cet actionneur 1. La première extrémité R1 de ce premier ressort 2 est fixée à ce carénage 3 et sa deuxième extrémité R2 à la première face F1 d'un piston 5, ce piston 5 étant lui-même contenu dans le carénage 3. Une deuxième face F2 du piston 5 est pourvue d'une première tige 4. Un gaz G, prélevé sur le moteur, entrant dans l'actionneur via l'orifice 6 peut donc comprimer un ensemble mobile, composé du ressort 2, du piston 5 et de la première tige 4 faisant ainsi passer l'actionneur d'une position allongée à une position rétractée.

L'actionneur 1 a pour objet d'augmenter le pas pilote et par suite le pas des pales du rotor principal lors d'un vol se déroulant correctement dit « mode de vol normal ». Dans le cas d'une défaillance du moteur dit « mode de vol dégradé », cette augmentation est automatiquement supprimée faisant ainsi décroître le pas collectif des pales du rotor principal.

Pour ce faire, la pression du gaz G entrant dans l'actionneur 1 doit parfaitement refléter l'état de l'installation motrice. Le gaz, nommé P4, prélevé avant la dernière turbine du moteur du giravion est une bonne référence. Néanmoins, sa température étant élevée, il est préférable d'utiliser le gaz, nommé P2, prélevé à la sortie de l'étage du compresseur du moteur.

En mode de vol normal, la pression du gaz G est supérieure à un seuil prédéfini correspondant à un fonctionnement du moteur à un niveau de puissance faible. Ce niveau de puissance faible, de préférence de l'ordre de 20% de la puissance nominal du moteur, est cependant suffisamment élevé pour que le régime de rotation du rotor, sans action sur les commandes de vol, reste supérieur au régime minimal autorisé par le constructeur du giravion. Dans ce mode de vol particulier, le gaz G traverse l'orifice 6 et comprime l'ensemble mobile. L'actionneur 1 est en position rétractée.

A contrario, en mode de vol dégradé, la pression du gaz G, inférieure au seuil prédéfini, n'est plus suffisante pour comprimer l'ensemble mobile. L'actionneur 1 est alors en position allongée.

L'agencement de l'actionneur 1 sur la ligne de commande de pas est concevable suivant plusieurs modes de réalisation.

La figure 3 présente un premier mode de réalisation. Afin d'abaisser automatiquement le pas des pales du rotor principal au moment de la détection d'une défaillance de l'installation motrice, l'actionneur 1 est inséré en série sur la ligne de commande de pas. Idéalement, il sera agencé sur la bielle 11 située entre la deuxième tige 10 et le combinateur 9.

Cette installation a pour effet d'augmenter le pas pilote en mode de vol normal, l'actionneur 1 étant en position rétractée. Le pas pilote est donc supérieur au pas plateau. Au passage en mode de vol dégradé, l'actionneur passe automatiquement en position allongée. L'augmentation du pas pilote est supprimée, ce dernier est donc identique au pas plateau. Le pas général des pales du rotor principal est ainsi immédiatement réduit.

La figure 4 présente les courbes C1 et C2 du pas plateau en fonction du pas pilote pour ce premier mode de réalisation, le pas plateau étant en ordonnée et le pas pilote en abscisse. Ces courbes C1 et C2 correspondent respectivement à une loi de fonctionnement en puissance pour le mode de vol normal et une loi de fonctionnement à puissance nulle pour le mode de vol dégradé. Le montage en série de l'actionneur 1 ayant un impact sur l'ordonnée à l'origine de la courbe C1, les courbes C1 et C2 sont parallèles.

En mode de vol normal, l'actionneur est en position rétractée et amplifie le pas pilote (point A sur la loi C1). Cette amplification n'est en aucun cas néfaste pour le vol. En effet, les butées de commandes, installées au niveau du levier de pas collectif 7, sont positionnées de manière à ce que le pas maximal du plateau cyclique P ainsi que le débattement maximal du levier de pas collectif 7 ne soit jamais dépassés, quelque soit la position de l'actionneur.

Si une panne motrice se produit, l'actionneur passe automatiquement en position allongée suivant le processus décrit précédemment. Cet allongement induit un mouvement vers le bas du plateau cyclique P et par conséquent un abaissement immédiat du pas des pales du rotor principal. Le pas plateau devient identique au pas pilote (point B sur la courbe C2). La baisse du régime du rotor principal sera alors partiellement stoppée.

La figure 5 présente un second mode de réalisation. L'actionneur est dans cette configuration installé en dérivation sur la ligne de commande de pas.

Le levier de renvoi 8 du combinateur 9 est muni d'un axe de rotation A et d'un trou oblong 16, l'extrémité 17 de la bielle 11 étant disposée dans ce trou oblong 16. L'actionneur 1 est agencé sur ce levier de renvoi 8. De plus, la première tige 4 de l'actionneur 1 est connectée à l'extrémité 17 de la bielle 11. Dans ces conditions, l'actionneur influe sur la hauteur H séparant l'axe de rotation A de l'extrémité 17.

En agissant sur le bras de levier de hauteur H, l'actionneur 1 permet de passer d'une loi de fonctionnement en puissance pour le mode de vol normal à une loi de fonctionnement à puissance nulle pour le mode de vol dégradé, et inversement.

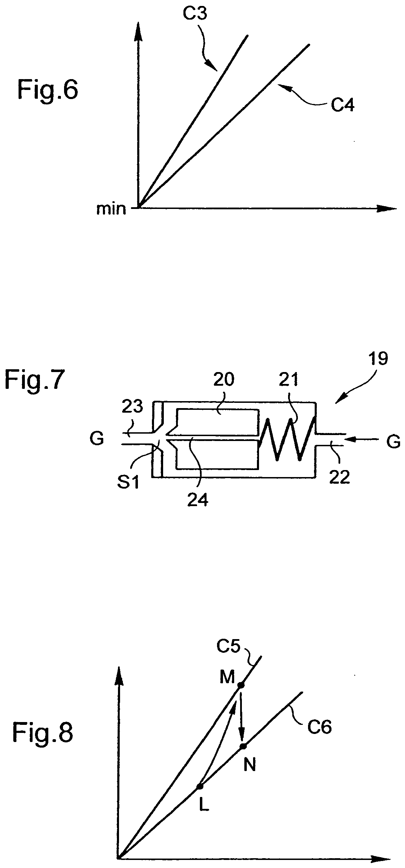

La figure 6 présente les courbes C3 et C4 du pas plateau en fonction du pas pilote pour ce deuxième mode de réalisation, le pas plateau étant en ordonnée et le pas pilote en abscisse. Les courbes C3 et C4, relatives respectivement aux lois de fonctionnement en puissance et de fonctionnement à puissance nulle, sont concourantes. Leur point commun correspond au pas minimal nommé «min».

Cette disposition a l'avantage de permettre au pilote d'avoir accès au pas minimal min en toute circonstance. En effet, il est possible que l'actionneur tombe en panne et ne remplisse plus sa fonction. S'il reste bloqué en position allongée, le pilote pourra tout de même atteindre le pas minimal min et donc réaliser ses manoeuvres en toute sécurité.

Par ailleurs, nous avons vu que lors d'un passage en mode de vol dégradé, mode pour lequel l'installation motrice est défaillante, il est impératif de baisser immédiatement le pas des pales du rotor principal. L'actionneur 1, quelque soit le mode de réalisation choisi, remplit parfaitement cette fonction. Cependant, l'expérience a démontré qu'au cours de certaines phases de vol, cette action peut être insuffisante.

En effet, lors d'un vol de croisière, la baisse de pas induit un départ à piquer du giravion. Cela conduit à une réduction du facteur de charge, c'est-à-dire une diminution des efforts et moments appliqués sur les pales. Cette diminution entraîne une chute supplémentaire du régime du rotor principal. Pour contrecarrer ce phénomène et donc obtenir un gain substantiel lors de la manoeuvre, il est nécessaire de cabrer légèrement le giravion.

Pour ce faire, la longueur du levier d'attaque basculant 18 de la servo-commande longitudinale 13 est raccourcie afin de rétracter légèrement cette servo-commande 13. Le couplage ainsi réalisé entre le pas général et le pas cyclique longitudinal améliore l'efficacité de la baisse de pas. Ce raccourcissement sera de façon avantageuse de l'ordre de 10%.

Par ailleurs, l'augmentation où la réduction automatique du pas des pales en fonction de l'état de l'installation motrice doit être entreprise dans les meilleures conditions possibles.

Nous savons de manière générale que le régime du rotor est lié à la puissance développée par le moteur. Afin de ne pas avoir un système instable, c'est-à-dire un système pour lequel le pas collectif des pales est stabilisé alors que la puissance du moteur croît, l'augmentation du pas collectif doit être réalisée en une durée du même ordre que celle relative à l'augmentation de la puissance développée par le moteur. A contrario, la chute de puissance étant instantanée lors d'une panne moteur, la baisse de pas doit être immédiate afin de conserver le régime du rotor principal acceptable.

De ce fait, une unité de filtrage dissymétrique 19, présentée sur la figure 7, est disposée entre l'installation motrice et l'actionneur 1.

Cette unité de filtrage dissymétrique 19 est composée d'une partie mobile 20 reliée à un deuxième ressort 21 et traversée en son centre par un canal étroit 24. Le gaz G prélevé sur l'installation motrice pénètre dans l'unité de filtrage dissymétrique 19 par une première conduite 22 et sort par une seconde conduite 23 pour être dirigé vers l'orifice 6 de l'actionneur 1.

Au repos, le moteur étant éteint, la pression du gaz prélevé G est nulle. Le ressort 21 est détendu, venant ainsi plaquer la partie mobile 20 contre la seconde conduite 23. La section de passage S1 est alors minimale et égale à la section du canal étroit 24.

Au démarrage du moteur, la pression du gaz prélevé G augmente. Ce gaz G ne peut passer dans la seconde conduite 23 qu'en traversant la section de passage S1, cette dernière étant alors minimale et égale à la section du canal étroit 24. Dans ces conditions, la pression du gaz G à l'entrée de l'orifice 6 de l'actionneur 1 augmentera lentement. En référence à la figure 8, l'actionneur 1 passera donc d'une position allongée (point L sur la courbe C6) à une position rétractée (point M sur la courbe C5) d'une façon progressive en une durée sensiblement équivalente à la durée pendant laquelle la puissance du moteur croît.

A contrario, si une panne moteur se produit, la pression du gaz prélevé G diminue fortement. Par conséquent, la pression régnant en amont de la partie mobile 20 est inférieure à celle régnant dans la seconde conduite 23. De ce fait, la partie mobile 20 est repoussé en comprimant le ressort 21. La section de passage S1 devient alors maximale et égale à la section de la seconde conduite 23. Dans ces conditions, la pression du gaz G à l'entrée de l'orifice 6 de l'actionneur 1 chute rapidement. Le passage à la position allongée (point N sur la courbe C6) de l'actionneur 1 sera donc quasiment instantané.

Naturellement, la présente invention est sujette à de nombreuses variations quant à sa mise en oeuvre. Bien que plusieurs modes de réalisations aient été décrits, on comprend bien qu'il n'est pas possible d'identifier de manière exhaustive tous les modes possibles. Il est bien sûr possible de remplacer un moyen décrit par un moyen équivalent sans sortir du cadre de la présente invention.

## Revendications

1. Dispositif permettant de baisser automatiquement le pas collectif des pales d'un rotor principal d'un giravion monomoteur lors d'une panne du moteur, ledit pas collectif étant piloté par une ligne de commande de pas, comportant:
- un actionneur (1) apte à être à être commandé par la pression d'un gaz prélevé sur ledit moteur et à être agencé sur ladite ligne de commande de pas pour augmenter, en position rétractée, le pas collectif desdites pales lorsque la pression du gaz correspond au mode de vol normal et pour diminuer, en position allongée, ce pas collectif lorsque la pression du gaz correspond à un fonctionnement dudit moteur à un niveau de puissance faible, et permettant audit rotor principal d'avoir un régime de rotation supérieur au régime minimal autorisé par le constructeur, et
- une unité de filtrage dissymétrique (19) régulant la pression du gaz (G) en amont de l'actionneur (1) pour que, au niveau de l'actionneur, elle augmente lentement lorsque la pression du gaz prélevé augmente et diminue fortement si une panne moteur se produit.

2. Dispositif selon la revendication 1,
**caractérisé en ce que** ledit niveau de puissance faible correspond sensiblement à 20% de la puissance nominal dudit moteur du giravion.

3. Dispositif selon l'une quelconque des revendications précédentes,
**caractérisé en ce que** ledit gaz (G) est prélevé avant une dernière turbine dudit moteur.

4. Dispositif selon l'une quelconque des revendications 1 à 3, **caractérisé en ce que** ledit gaz (G) est prélevé à la sortie d'un étage d'un compresseur dudit moteur.

5. Giravion monomoteur muni d'un rotor principal pourvu d'une pluralité de pales, un pas collectif desdites pales étant piloté par une ligne de commande de pas, **caractérisé en ce qu'**il comporte un dispositif permettant de baisser automatiquement le pas collectif des pales du rotor principal lors d'une panne dudit moteur selon l'une quelconque des revendications 1-4, où
- l'actionneur (1) est agencé sur ladite ligne de commande de pas et,
- dans lequel ledit actionneur (1) étant commandé par la pression d'un gaz (G) prélevé sur ledit moteur, l'unité de filtrage dissymétrique (19) régule la pression du gaz (G) en amont de l'actionneur (1).

6. Giravion selon la revendication 5,
**caractérisé en ce que** ladite ligne de commande de pas comportant successivement un levier de commande de pas collectif (7), une bielle (11), un combinateur (9), des servo-commandes (12, 13, 14) et un plateau cyclique relié auxdites pales.

7. Giravion selon la revendication 6,
**caractérisé en ce que**, ledit actionneur (1) est agencé sur ladite bielle (11).

8. Giravion selon la revendication 6,
**caractérisé en ce que** ledit actionneur (1) est agencé sur un levier de renvoi (8) dudit combinateur (9).

9. Giravion selon l'une quelconque des revendications 7 à 8,
**caractérisé en ce que**, un levier d'attaque basculant (18) étant agencé entre une servo-commande (13) longitudinale et ledit combinateur (9), la longueur dudit levier d'attaque basculant (18) est raccourcie d'environ 10%.

## Patentansprüche

1. Vorrichtung zum automatischen Absenken der kollektiven Steigung der Blätter eines Hauptrotors eines einmotorigen Drehflüglers bei einem Motorausfall, wobei die kollektive Steigung durch eine Steigungssteuerleitung gesteuert ist, mit:
- einem Stellglied (1), das eingerichtet ist, um durch den Druck eines am Motor abgegriffenen Gases gesteuert zu werden und auf der Steigungssteuerleitung angeordnet zu werden, um in eingefahrener Position die kollektive Steigung der Blätter zu erhöhen, wenn der Gasdruck dem normalen Flugmodus entspricht, und in ausgefahrener Position diese kollektive Steigung zu verringern, wenn der Gasdruck dem Betrieb des Motors bei einer niedrigen Leistungsstufe entspricht, und dem Hauptrotor zu ermöglichen, eine Drehzahl zu erreichen, die höher ist als die vom Hersteller genehmigte Mindestdrehzahl, und
- einer asymmetrischen Filtereinheit (19), die den Gasdruck (G) stromaufwärts des Stellglieds (1) so regelt, dass er am Stellglied langsam ansteigt, wenn der Druck des abgegriffenen Gases steigt, und bei einem Motorausfall stark abnimmt.

2. Vorrichtung nach Anspruch 1,
**dadurch gekennzeichnet, dass** die niedrige Leistungsstufe im Wesentlichen 20% der Nennleistung des Motors des Drehflüglers entspricht.

3. Vorrichtung nach einem der vorhergehenden Ansprüche,
**dadurch gekennzeichnet, dass** das Gas (G) vor einer letzten Turbine des Motors abgegriffen wird.

4. Vorrichtung nach einem der Ansprüche 1 bis 3,
**dadurch gekennzeichnet, dass** das Gas (G) am Ausgang einer Verdichterstufe des Motors abgegriffen wird.

5. Einmotoriger Drehflügler mit einem Hauptrotor, der mit einer Mehrzahl von Blättern ausgestattet ist, wobei eine kollektive Steigung der Blätter durch eine Steigungssteuerleitung gesteuert ist,
**dadurch gekennzeichnet, dass** er eine Vorrichtung zum automatischen Absenken der kollektiven Steigung der Blätter des Hauptrotors im Falle eines Ausfalls des Motors nach einem der Ansprüche 1-4 umfasst, wobei das Stellglied an der Steigungssteuerleitung angeordnet ist, und
- dass das Stellglied (1) durch den Druck eines am Motor abgegriffenen Gases (G) gesteuert ist, wobei die asymmetrische Filtereinheit (19) den Gasdruck (G) stromaufwärts des Stellglieds (1) regelt.

6. Drehflügler nach Anspruch 5,
**dadurch gekennzeichnet, dass** die Steigungssteuerleitung nacheinander einen Steuerungshebel für die kollektive Steigung (7), eine Koppelstange (11), einen Kombinierer (9), Servosteuerungen (12, 13, 14) und eine mit den Blättern verbundene Taumelscheibe umfasst.

7. Drehflügler nach Anspruch 6,
**dadurch gekennzeichnet, dass** das Stellglied (1) an der Koppelstange (11) angeordnet ist.

8. Drehflügler nach Anspruch 6,
**dadurch gekennzeichnet, dass** das Stellglied (1) an einem Umlenkhebel (8) des Kombinierers (9) angeordnet ist.

9. Drehflügler nach einem der Ansprüche 7 bis 8,
**dadurch gekennzeichnet, dass** ein schwenkbarer Antriebshebel (18) zwischen einem Längsservoverstärker (13) und dem Kombinierer (9) angeordnet ist, wobei die Länge des schwenkbaren Antriebshebels (18) um etwa 10% verkürzt ist.

## Claims

1. A device enabling the collective pitch of the blades of the main rotor of a single-engine rotorcraft to be reduced automatically in the event of an engine failure, said collective pitch being controlled by a pitch control line, comprising:
- an actuator (1) designed to be controlled by the pressure of a gas taken from said engine and to be arranged on said pitch control line for increasing, in the retracted position, the collective pitch of said blades when the gas pressure corresponds to the normal flight mode and to decrease, in the extended position, said collective pitch when the gas pressure corresponds to operation of said engine at a low power level, and enabling the speed of said main rotor to be greater than the minimum speed authorised by the manufacturer, and
- a dissymmetric filter unit (19) that regulates the pressure of the gas (G) upstream of the actuator (1) so that, at the actuator, it increases slowly when the pressure of the gas taken increases, and decreases markedly if an engine failure occurs.

2. Device according to Claim 1,
**characterised in that** said low power level corresponds substantially to 20% of the nominal power of said rotorcraft engine.

3. Device according to any one of the preceding claims,
**characterised in that** said gas (G) is taken ahead of a last turbine of said engine.

4. Device according to any one of Claims 1 to 3,
**characterised in that** said gas (G) is taken from the outlet of a compressor stage of said engine.

5. Single-engine rotorcraft equipped with a main rotor provided with a plurality of blades, a collective pitch of said blades being controlled by a pitch control line, **characterised in that** it comprises a device enabling the collective pitch of the blades of the main rotor to be reduced automatically in the event of a failure of said engine according to any one of Claims 1-4, wherein the actuator (1) is arranged on said pitch control line and,
- in which said actuator (1) being controlled by the pressure of a gas (G) taken from said engine, the dissymmetric filter unit (19) regulates the pressure of the gas (G) upstream of the actuator (1).

6. Rotorcraft according to Claim 5,
**characterised in that** said pitch control line comprises successively a collective pitch control lever (7), a connecting rod (11), a mixing unit (9), servo-controls (12, 13, 14) and a swash plate connected to said blades.

7. Rotorcraft according to Claim 6,
**characterised in that** said actuator (1) is arranged on said connecting rod (11).

8. Rotorcraft according to Claim 6,
**characterised in that** said actuator (1) is arranged on a bell crank (8) of said mixing unit (9).

9. Rotorcraft according to any one of Claims 7 to 8,
**characterised in that**, a droop lever (18) being arranged between a longitudinal servo-control (13) and said mixing unit (9), the length of said droop lever (18) is shortened by about 10%.
